# EUROPEAN PATENT SPECIFICATION

(11) **EP 1 814 766 B1**
(45) Date of publication and mention of the grant of the patent: **12.03.2008**
(21) Application number: 05798072.4
(22) Date of filing: 01.11.2005
(51) Int. Cl.: B61L 5/06, H02M 5/458, H03K 17/00

(54) **THE SAFE THREE-PHASE CONTACT-FREE SWITCH**
KONTAKTLOSER SICHERER DREHSTROMSCHALTER
COMMUTATEUR SANS CONTACT TRIPHASE SUR

(30) Priority: 02.11.2004 CZ 20041091
(43) Date of publication of application: 08.08.2007
(73) Proprietor: AZD Praha S.R.O., 106 17 Praha 10 (CZ)
(72) Inventor: BURDA, Martin, 798 03 Plumlov (CZ); MARTINEC, Josef, 153 00 Praha 16 (CZ); NOVAK, Jaroslav, 251 01 Ricany (CZ); DOUBEK, Pavel, 182 00 Praha 8 (CZ); FUCHS, Pavel, 182 00 Praha 8 (CZ)
(74) Representative: Smrckova, Marie
(86) International application number: PCT/CZ2005/000082
(87) International publication number: WO 2006/047971

(56) References cited:
- EP-A- 0 153 900
- EP-A- 1 207 622
- EP-A- 1 280 263
- EP-A- 1 309 089
- EP-A- 1 593 574
- DE-A1- 3 219 366
- JOOS G ET AL: "A new class of current-controlled suppressed-link AC to AC frequency changers" PROCEEDINGS OF THE ANNUAL POWER ELECTRONICS SPECIALISTS CONFERENCE. MASSACHUSETTS, 25 - 27 JUNE, 1991, NEW YORK, IEEE, US, vol. CONF. 22, 24 June 1991 (1991-06-24), pages 830-837, XP010048407 ISBN: 0-7803-0090-4

## Description

### Field of Invention

The invention concerns the safe three-phase contact-free switch for control of three-phase asynchronous motors, in particular in the area of signalling devices of railway transport, e.g. switch-point machines. The safe three-phase contact-free switch has three input phase voltages and three output phase voltages.

### Background of Invention

At present there are several methods of operating of switch-point machines with three phase asynchronous engines. The safety of control of switch-point machines, in particular in railway transport, is characterized by the basic requirement, that the motor must not start in the case of failure of one or more parts of the switch.

One of methods of control of the switch-point machine, in particular for signalling devices in railway transport, uses a relay of the 1^{st} class of security defined by standard UIC 736 i, and security of control is ensured by the attributes of this relay. The disadvantage of this solution is the fact, that it concerns contact switching with limited service life of contacts, as well as mechanical parts of this type of relay. Another disadvantage are the large relay dimensions.

Farther method of control for motor of swith-points machine is based on the use of a greater number of the II. security group relays, defined by standard UIC 736 i, when security of switching is ensured by the attributes of this type of relay with other control circuits. The disadvantage is again the contact switching, related to the limited service life of contacts and mechanical parts of this type of relay. The disadvantage is also the necessity to use a greater number of the relays of the II. security group and other control circuits to ensure the required level of security.

Another method of motor control of the switch-point machine is the use of an electronic converter. The input voltage in the converter is rectified by means of a block of rectifiers and filtered by an accumulation element (condenser). Smoothed DC voltage is then converted, by means of blocks of switches using pulse-width modulation, to the voltage with network frequency. Between the block of rectifiers and the block of switches there is a DC semi-circuit with accumulation element (condenser). This DC semi-circuit is common for all three phases. The frequency of switching of a block of switches is several times higher than the resulting network frequency. The safety of control of the motor of the switch-point machine is ensured by the principle, when in the case of failure of a partial part of the block of switches, the DV voltage comes in on the output of the converter, which does not cause torque movement, but it acts actively against the rotation of the rotor - brakes the motor. The advantage of the solution is contact-free switching of the motor of the switch-point machine and the possibility to reverse the running of the motor. The disadvantage of this solution is the origination of harmonic parts of voltages and currents, which must be removed by means of an additional output filter. If there is an additional requirement for an isolated supply system of the motor of the switch-point machine, other complications occur, because it is not possible to ground the filter and remove high-frequency components.

### Summary of Invention

The mentioned disadvantages are removed or significantly restricted by the safe three-phase contact-free switch according to this invention. The subject-matter of this invention is based on the fact, that safe three-phase contact-free switch has three input phase voltages of phases, which are separated by galvanic, from each other mutually, by the transformer. Behind the galvanic separation of phase voltages up to the output of sources of individual phases, there is a common node of the system created by connection of conductors of individual phases. The sinusoidal voltages and currents, entering into the three-phase asynchronous motor, have the frequency of the supply system. The source of voltage of the first output phase is a controlled first bridge inverter. The source of voltage of the second output phase is a controlled second bridge inverter. The source of voltage of the third output phase is secondary winding of the transformer or a controlled third bridge inverter.

The common node of individual phases of the output of safe three-phase contact-free switch is created after behind the controlled bridge inverters.

At least two phases are connected to the respective controlled bridge rectifiers, whose outputs are connected to the respective controlled bridge inverters. The switching frequency, of controlled bridge rectifiers and controlled bridge inverters, is identical, to the frequency of input phase voltages.

Behind the controlled rectifiers, independent DC semi-circuits are created, which do not contain any elements for accumulation of energy.

To prevent back influencing of the supply system, in particular by interference, before each controlled bridge rectifier there is a reactance-coil.

For the purpose of suppressing voltage shocks, caused by the function of controlled inverters, between inputs of the controlled bridge inverters there are anti-snubber member.

The main advantage of this invention is the fact, that this contact-free controlling of three-phase asynchronous motor, removes problems of existing electronic converters, i.e. that safe three-phase contact-free switch does not produce on its output any higher harmonic components of voltage and current. The new principle of a safe contact-free switch according to this invention operates only with sinusoidal voltages and currents, with the frequency of supply system. The input for a safe contact free switch are three phase voltages, which are mutually galvanically separated. Two phase voltages are then separately processed, by means of controlled rectifiers, on whose output there is voltage represented by positive half-waves, i.e. there is a turning of negative half-wave into positive polarity. Behind controlled rectifiers there are connected controller inverters, which perform back conversion of the voltage, represented only by positive half-waves, to sinusoidal course of voltage. Between controlled rectifiers and controlled inverters there is a DC semi-circuit, which does not contain any accumulation element of energy, and which is independent for each input phase. The switching frequency of controlled inverters is identical with the frequency of respective input phase voltages. Because the asynchronous motor represents inductive load, reactive component of energy is consumed during its operation. Controlled rectifiers and controlled inverters are constructed in such a manner, that they make it possible to transfer the backward components of current, i.e. reactive components of energy back from motor to the supply network. The third phase voltage is supplied on the output part directly without modifications. Creation of a common node of individual phases is performed after behind controlled inverters.

The safety of the switch is evaluated for status, when the motor is inactive and no signals are supplied to any switching elements. Individual or multiple failures are reflected in safe direction, i.e. by increase of the current, and protecting element reacts on it, which is ranked before safe three-phase contact-free switch, or by the occurrence of DC voltage on the output of the safe three-phase contact-free switch, which results in initiation of the braking effect on the engine.

Creation of control signals, for control of controlled rectifiers and inverters in two respective phases, is resolved by common suitable methods.

Reversing of the motor can be achieved by commonly known methods.

### Brief Description of the Drawings

The invention is described in detail in examples, which are explained with drawings, which represent block diagrams of safe three-phase contact-free switch in :
- Fig. 1: in basic variant,
- Fig. 2: application with block of disconnection and reversing and with connected motor, and
- Fig. 3: application according to Fig 2 with contact set over.
- In Fig. 4: there are courses for voltage in DC intermediate circuits and in
- Fig. 5: there are courses for voltage on the output of the safe contact-free switch.

### Detailed Description of the Preferred Embodiments

### Example 1

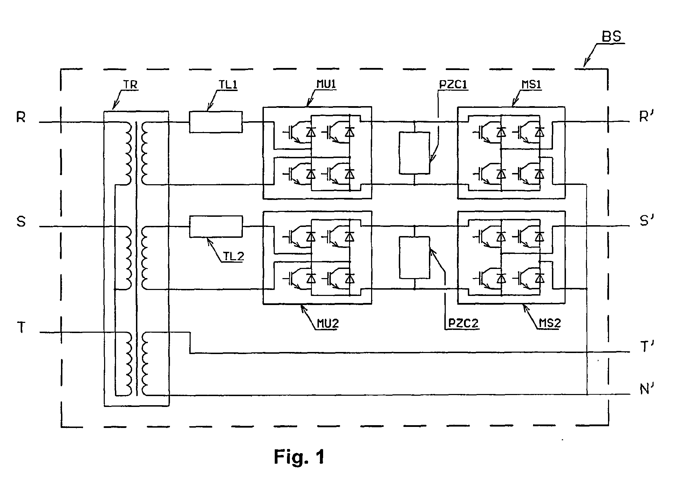

In Fig. 1 there is basic block diagram of the safe three-phase contact free switch BS, consisting of the three-phase transformer TR, reactor TL1, TL2, bridge rectifiers MU1, MU2, anti-snubber members PZC1, PZC2 and bridge inverters MS1, MS2. In Fig. 1 there is an actual connection of rectifiers MU1, MU2 and inverters MS1, MS2 by means of diodes and transistors.

On the primary winding of the transformer TR network voltage R, S, T of the distribution network is connected.

The first output of secondary winding of the phase R of the transformer TR is connected through reactor-coil TL1 to the first bridge rectifier MU1. The second output of secondary winding of the phase R is connected to the second input of the first bridge rectifier MU1. The positive output of the first bridge rectifier MU1 is connected to the first input of the first bridge inverter MS1. The negative output of the first bridge rectifier MU1 is connected to the second input of the first bridge inverter MS1. Between the positive and negative output of the first bridge rectifier MU1 there is the first anti-snubber member PZC1. The first output of the bridge inverter MS1 represents the phase R' of the output of safe three-phase contact-free switch BS. The second output of the first bridge inverter MS1 is connected to the common node N'.

The first output of secondary winding of the phase S of the transformer TR is connected through the second reactor coil TL2 to the first input of the second bridge rectifier MU2. The second output of secondary winding of the phase S is connected to the second input of the second bridge rectifier MU2. The positive output of the second bridge rectifier MU2 is connected to the first input of the second bridge inverter MS2. The negative output of the second bridge rectifier MU2 is connected to the second input of the second bridge inverter MS2. Between the positive and negative output of the second bridge rectifier MU2 there is the second anti- snubber member PZC2. The first output of the second bridge inverter MS2 represents the phase S' of the output of safe three-phase contact-free switch BS. The second output of the second bridge inverter MS2 is connected to the common node N'.

The first output of secondary winding of the phase T of the transformer TR represents the phase T of the output of the safe three- phase contact- free switch BS. The second output of secondary winding of the phase T of the transformer TR is connected to the common node N'.

The common node N' consists of the second output of the first bridge inverter MS1, the second output of the second bridge inverter MS2 and the second output of secondary winding of the phase T of the transformer TR. The common node N' of individual phases R', S', T' is created after behind controlled inverters MS1, MS2.

The transformer TR serves for galvanic separation of primary windings of input supply voltages of individual phases R, S, T from secondary windings of phases R, S, T and, at the same time, it galvanically separates individual secondary windings R, S, T mutually.

Reactor-coils TL1, TL2 serve to suppress back current shocks, originated during the function of rectifiers MU1, MU2 and inverters MS1, MS2.

Anti-snubber members PZC1, PZC2 serve to suppress voltage shocks, originated during the commutation of current, between transistors and diodes, in controlled inverters MS1, MS2.

Bridge rectifiers MU1, MU2 and bridge inverters MS1, MS2 consist of electronic contact-free switching elements, e.g. transistors MOSFET, transistors IGBT etc., and other semi-conductor elements, e.g. diodes.

The input for the safe three phase contact-free switch BS are three phase voltages R, S, T, which are mutually galvanically separated by means of the transformer TR. Two phase voltages of phases R, S, are separately processed by means of controlled bridge rectifiers MU1, MU2, on whose output are pulsating the DC voltage. Bridge rectifiers MU1, MU2 are constructed in such a manner, that they enable to transfer reactive components of energy back to the distribution supply network. Behind the controlled bridge rectifiers MU1, MU2 there are connected controlled bridge inverters MS1, MS2, which backwards convert the pulsating voltage to the sinusoidal course of the respective phase R', S'. Between rectifiers MU1, MU2 and inverters MS1, MS2 are generated two independent DC semi-circuits, which do not contain any element for accumulation of energy. The frequency of switching of rectifiers MU1, MU2 and inverters MS1, MS2 is identical with the frequency of input phase voltages. Bridge inverters MS1, MS2 are constructed in such a manner, that they enable to transfer the reactive component of electric energy. The input third phase voltage of the phase T is directly supplied, after galvanic separation by the transformer TR, on the output of the safe contact-free switch BS, without additional modifications, as the phase T'. Conductors from individual phase voltages are connected to the output part so, that node N' of the system is created.

Creation of control signals for the control of controlled rectifiers MU1, MU2 and inverters MS1, MS2 in two respective phases depends on the actual application, transferred output of energy, frequency of input voltages of phases R, S, T, distance of the connected motor from the switch BS, etc.

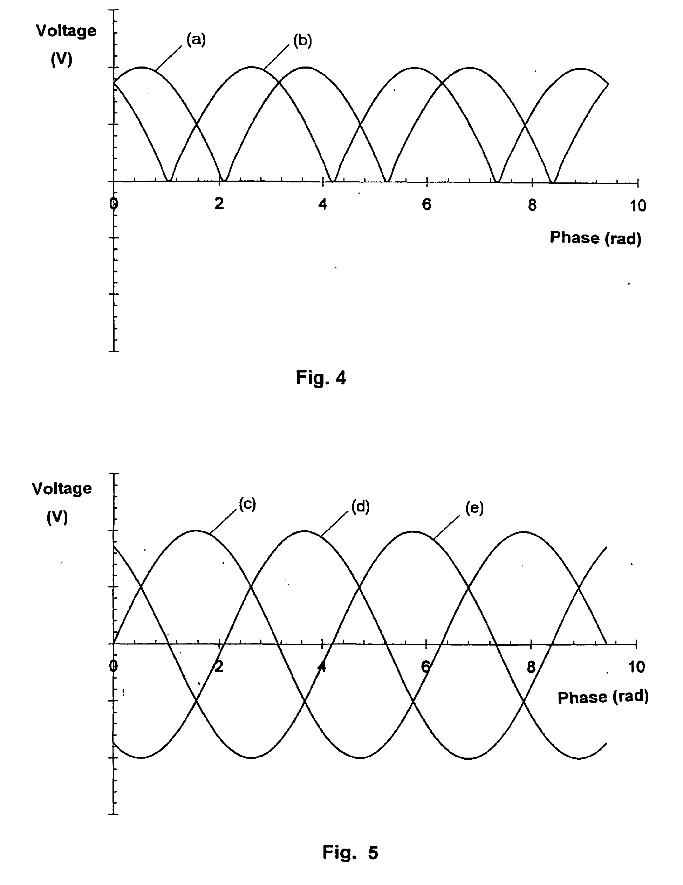

Courses of voltages in DC semi-circuits are evident from Fig. 4, depending on the phase of the signal, given in radians. The curve (a) represents the course of voltage of the DC semi-circuit of the phase R'. The curve (b) represents the course of voltage of the DC semi-circuit of the phase S'. It is evident, from the displayed dependences in Fig. 4, that controlled rectifiers MS1, MS2 convert the sinusoidal signal of the input voltage only to positive half-waves.

Courses of voltage on the output of the safe three-phase contact-free switch are evident from Fig. 5, depending on the phase of the signal, given in radians. The curve (c) represents the course of voltage of the phase voltage T', the curve (d) represents the course of the voltage phase R' and the curve (e) represents the course of the voltage phase S'. It results from the displayed courses of voltage, that controlled bridge inverters MS1, MS2 retroactively convert voltage of DC semi-circuits, consisting only of positive half-waves, to the sinusoidal course of voltages.

### Example 2

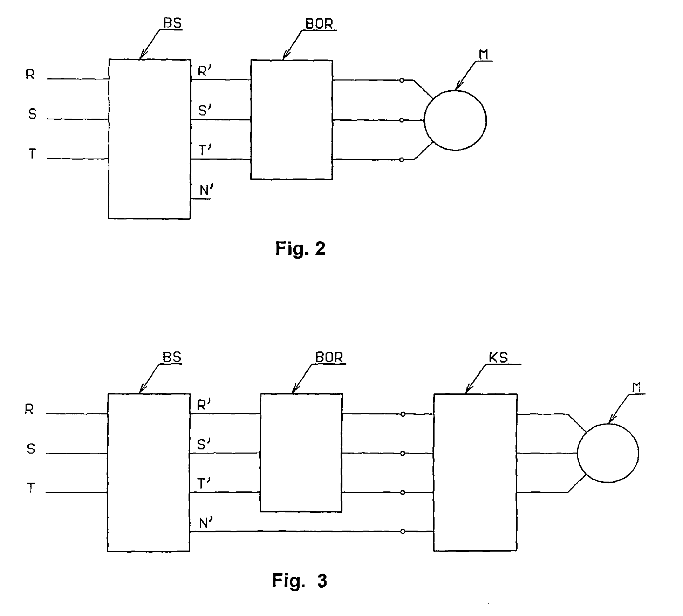

In Fig. 2 there is a block diagram of the example of the application of the safe three-phase contact-free switch BS, containing block BOR for disconnection and reversion and three-phase asynchronous motor M.

The output R' of the safe three-phase contact-free switch BS is connected to the first input of the block BOR for disconnection and reversion. The first output of the block BOR of disconnection and reversion is connected to the first input of the asynchronous motor M.

The output S' of the safe three-phase contact-free switch BS is connected to the second input of the block BOR of disconnection and reversion. The second output of the block BOR for disconnection and reversion is connected to the second input of the asynchronous motor M.

The output T' of the safe three-phase contact-free switch BS is connected to the third input of the block BOR for disconnection and reversion. The third output of the block BOR of disconnection and reversion is connected to the third input of the asynchronous motor M.

The output from the common node N' of the safe three-phase contact-free switch BS is not connected in this connection.

The safe three-phase contact-free switch BS in cooperation with block BOR of disconnection and reversion ensures the disconnection and control of the three-phase asynchronous motor M in both directions of rotation. This application is used, for example, for control of the motor in the switch-pint machine in the railway technology for switching switches to both positions in a three-wire connection of the three-phase asynchronous motor M of the switch-point machine.

### Example 3

In Fig. 3 there is a block diagram of the example of the application of the safe three-phase contact-free switch BS, containing block BOR of disconnection and reversion and the three-phase asynchronous motor M, whose integral part is the contact set KS.

The output R' of the safe three-phase contact-free switch BS is connected to the first input of the block BOR for disconnection and reversion. The first output of the block BOR of disconnection and reversion is connected to the first input of the contact set KS. The first output of the contact set KS is connected to the first input of the three-phase asynchronous motor M.

The output S' of the safe three-phase contact-free switch BS is connected to the second input of the block BOR of disconnection and reversion. The second output of the block BOR for disconnection and reversion is connected to the second input of the contact set KS. The second output of the contact set KS is connected to the second input of the three-phase asynchronous motor M.

The output T' of the safe three-phase contact-free switch BS is connected to the third input of the block BOR for disconnection and reversion. The third output of the block BOR of disconnection and reversion is connected to the third input of the contact set KS. The third output of the contact set KS is connected to the third input of the three-phase asynchronous motor M.

The output from the common node N' of the safe three-phase contact-free switch BS is directly connected to the fourth input of the contact set KS.

The safe three-phase contact-free switch BS in cooperation with block BOR of disconnection and reversion performs the disconnection and control of three-phase asynchronous motor M with the contact set KS in both directions of rotation. This application is used, for example for control of the asynchronous three-phase motor M in the switch-point machine in the railway technology for switching switches to both positions in a four-wire connection of the three-phase asynchronous motor M of the switch-point machine.

The mentioned examples do not restrict other variants and combinations of solutions within the idea of the patent claims of this invention.

### Industrial Applicability

The technical solution is used in all areas with the requirement of safe control of three-phase asynchronous motors M. It is also possible to use it in the area of railway signalling devices to control switch-point machines with three-phase asynchronous motors M. It is also possible to use the solution in other areas where contact-free switching with similar claims is required.

## Claims

1. A safe three-phase contact-free switch for control of three-phase asynchronous motors, in particular In the area of signalling devices of railway transport, e.g. switch-point machines, having three input phase voltages of phases (R, S, T) and three output phase voltages of phases (R', S', T'),
**characterized by** the fact, that it has
three input phase voltages of phases (R, S, T), mutually galvanically separated by a transformer (TR) and
three output phase voltages of phases (R', S', T') having a common node (N'); created by the connection of respective outputs of sources of the three individual voltages of phases (R', S', T'), whose voltages and currents are sinusoidal, entering into the three-phase asynchronous motor (M), having the same frequency as the supply system,
where the source of the voltage of phase (R') is a controlled first bridge inverter (MS1), the source of the voltage of phase (S') is a controlled second bridge inverter (MS2) and the source of voltage of phase (T') is a secondary winding of the transformer (TR) of the phase (T).

2. The safe three-phase contact-free switch according to claim 1,
is **characterized by** the fact, that
the common node (N') of individual phases (R', S', T') of the output of safe three-phase contact-free switch (BS) is created after behind the controlled bridge inverters (MS1, MS2).

3. The safe three-phase contact-free switch according to claim 1 or 2,
is **characterized by** the fact, that
at least two phases (R, S) are connected to the respective controlled bridge rectifiers (MU1, MU2), whose outputs are connected to the respective controlled bridge inverters (MS1, MS2), whereas the frequency of switching of rectifiers (MU1, MU2) and inverters (MS1, MS2) is identical with the frequency of input phase voltages of phases (R,S,T).

4. The safe three-phase contact-free switch according to claim 3,
is **characterized by** the fact that
between the controlled bridge rectifier (MU1, MU2) and the controlled bridge inverter (MS1, MS2), for each input phase (R, S), is created an independent DC semi-circuit, without elements for accumulation of energy.

5. Safe three-phase contact-free switch according to some of the claims 1 to 4, is
**characterized by** the fact that
the phase (R) is connected to the first controlled bridge rectifier (MU1), whose output is connected to the first controlled inverter (MS1), and the phase (S) is connected to the second controlled bridge rectifier (MU2), whose output is connected to the second controlled bridge inverter (MS2).

6. Safe three-phase contact-free switch according to some of claims 1 to 5,
is **characterized by** the fact that
each of at least two phases (R, S) of voltage is connected to the controlled bridge rectifier (MU1, MU2) through the reactor-coil (TL1, TL2).

7. Safe three-phase contact-free switch according to some of the claims 1 to 6, is
**characterized by** the fact that
between the outputs of controlled bridge rectifiers (MU1, MU2) are connected anti-snubber members (PZC1, PZC2), which do not serve for the accumulation of energy in DC semi-circuits.

## Patentansprüche

1. Der kontaktfreie dreiphasige Schutzschalter zur Steuerung dreiphasiger asynchroner Motoren insbesondere im Bereich der Sicherungsanlagen des Bahnverkehrs, z.B. von Weichenblöcken, der drei Eingangsphasenspannungen der Phasen (R, S, T) und drei Ausgangsphasenspannungen der Phasen (R', S', T') hat
**ist dadurch gekennzeichnet, dass**
er drei Eingangsphasenspannungen der Phasen (R, S, T) hat, die voneinander durch einen Transformator (TR) galvanisch getrennt sind, und
drei Ausgangsphasenspannungen der Phasen (R', S', T') hat, die einen gemeinsamen Knoten (N') haben, der durch die Verbindung der entsprechenden Ausgangsquellen der einzelnen Spannungsphasen (R', S', T') gebildet ist, deren Sinusspannung und Ströme in den dreiphasigen asynchronen Motor (M) eintreten, der eine Frequenz des Spannungssystems hat, wobei
Quelle der Spannungsphase (R') ein gesteuerter Brückenwechselrichter (MS1) ist.
Quelle der Spannungsphase (S') ein gesteuerter Brückenwechselrichter (MS2) ist, und
Quelle der Spannungsphase (T') eine sekundäre Windung des Transformators (TR) der Phase (T) ist.

2. Der kontaktfreie dreiphasige Schutzschalter gemäß dem Anspruch 1,
**ist dadurch gekennzeichnet, dass**
der gemeinsame Knoten (N') der einzelnen Phasen (R', S', T') des Ausgangs des kontaktfreien dreiphasigen Schutzschalters (BS) erst hinter den gesteuerten Brückenwechseinrichter (MS1, MS2) gebildet ist.

3. Der kontaktfreie dreiphasige Schutzschalter gemäß dem Anspruch 1 oder 2,
**ist dadurch gekennzeichnet, dass**
wenigstens zwei Phasen (R, S) an die entsprechenden Brückengleichrichter (MU1, MU2) angeschlossen sind, deren Ausgänge an die entsprechenden gesteuerten Brückenwechselrichter (MS1, MS2) angeschlossen sind, wobei die Schaltfrequenz der Gleichrichter (MU1, MU2) und der Wechselrichter (MS1, MS2) mit der Frequenz der Eingangsphasenspannungen der Phasen (R, S, T) übereinstimmend ist.

4. Der kontaktfreie dreiphasige Schutzschalter gemäß dem Anspruch 3,
**ist dadurch gekennzeichnet, dass**
zwischen dem gesteuerten Brückengleichrichter (MU1, MU2) und dem gesteuerten Brückenwechselrichter (MS1, MS2) für jede Eingangsphase (R, S) ein unabhängiger Gleichstromzwischenkreis ohne Elemente für die Akkumulation von Energie gebildet ist.

5. Der kontaktfreie dreiphasige Schutzschalter gemäß einem der Ansprüche 1 bis 4,
**ist dadurch gekennzeichnet, dass**
die Phase (R) an den gesteuerten ersten Brückengleichrichter (MU1) angeschlossen ist, dessen Ausgang an den gesteuerten ersten Brückenwechselrichter (MS1) angeschlossen ist, und die Phase (S) ist an den gesteuerten zweiten Brückengleichrichter (MU2) angeschlossen, dessen Ausgang an dan gesteuerten zweiten Brückenwechselrichter (MS2) angeschlossen ist.

6. Der kontaktfreie dreiphasige Schutzschalter gemäß einem der Ansprüche 1 bis 5,
**ist dadurch gekennzeichnet, dass**
jede von den wenigstens zwei Phasen (R, S) der Spannung an einen gesteuerten Brückengleichrichter (MU1, MU2) über eine Drosselspule (TL1, TL2) angeschlossen ist.

7. Der kontaktfreie dreiphasige Schutzschalter gemäß einem der Ansprüche 1 bis 6,
**ist dadurch gekennzeichnet, dass**
zwischen den Ausgängen der gesteuerten Brückengleichrichter (MU1, MU2) Schwingungsschutzglieder (PZC1, PZC2) angeschlossen sind, die nicht zur Akkumulation von Energie in den Gleichstromzwischenkreis dienen.

## Revendications

1. Interrupteur de sécurité triphasé sans contact pour la commande des moteurs asynchrones triphasés avant tout dans le domaine des équipements de sécurisation du transport ferroviaire, par ex. les mécanismes de commande d'aiguille, possédant trois tensions d'entrée de phases (R, S, T) et trois tensions de sortie de phases (R', S', T'),
**se caractérisant par le fait** de
posséder trois tensions d'entrée de phases (R, S, T) galvaniquement séparées les unes des autres par un transformateur (TR) et
trois tensions de sortie de phases (R', S', T) ayant un noeud commun (N') formé par la jonction des sorties correspondantes des sources de chaque tension de phase (R', S', T'), dont les tensions sinusoïdales et les courants entrant dans le moteur asynchrone triphasé (M) ont la fréquence du système d'alimentation, où
la source de tension de phase (R') est le premier onduleur en pont commandé (MS1), la source de tension de phase (S') est le deuxième onduleur en pont commandé (MS2) et la source de tension de phase (T') est l'enroulement secondaire du transformateur (TR) de phase (T).

2. Interrupteur de sécurité triphasé sans contact selon la revendication 1,
**se caractérisant par le fait que**
le noeud commun (N') de chaque phase (R', S', T') de sortie de l'interrupteur de sécurité triphasé sans contact (BS) n'est formé que derrière les onduleurs en pont commandés (MS1, MS2).

3. Interrupteur de sécurité triphasé sans contact selon la revendication 1 ou 2,
**se caractérisant par le fait que**
deux phases (R, S) au moins sont raccordées aux redresseurs en pont commandés correspondants (MU1, MU2), dont les sorties sont raccordées aux onduleurs en pont commandés correspondants (MS1, MS2), la fréquence de commutation des redresseurs (MU1, MU2) et des onduleurs (MS1, MS2) étant similaire à la fréquence des tensions d'entrée de phases (R, S, T).

4. Interrupteur de sécurité triphasé sans contact selon la revendication 3,
**se caractérisant par le fait qu**'
entre le redresseur en pont commandé (MU1, MU2) et l'onduleur en pont commandé (MS1, MS2) est formé pour chaque phase d'entrée (R, S) un circuit intermédiaire indépendant de tension continue sans éléments pour l'accumulation d'énergie.

5. Interrupteur de sécurité triphasé sans contact selon l'une des revendications 1 à 4,
**se caractérisant par le fait que**
la phase (R) est raccordée au premier redresseur en pont commandé (MU1), dont la sortie est raccordée au premier onduleur en pont commandé (MS1) et la phase (S) est raccordée au deuxième redresseur en pont commandé (MU2), dont la sortie est raccordée au deuxième onduleur en pont commandé (MS2).

6. Interrupteur de sécurité triphasé sans contact selon l'une des revendications 1 à 5,
**se caractérisant par le fait que**
chacune des deux phases (R, S) de tension au moins est raccordée à un redresseur en pont commandé (MU1, MU2) par une self (TL1, TL2).

7. Interrupteur de sécurité triphasé sans contact selon l'une des revendications 1 à 6,
**se caractérisant par le fait qu**'
entre les sorties des redresseurs en pont commandés (MU1, MU2) sont branchés des éléments antivibration (PZC1, PZC2), ne servant pas à l'accumulation d'énergie dans les circuits intermédiaires de tension continue.
